# EUROPEAN PATENT APPLICATION

(11) **EP 2 339 193 A1**
(43) Date of publication of application: **29.06.2011**
(21) Application number: 10196796.6
(22) Date of filing: 23.12.2010
(51) Int. Cl.: F16C 19/52, F16C 33/60, F16C 33/66

(54) **A high-precision rolling-contact bearing**

(30) Priority: 23.12.2009 IT TO20091028
(71) Applicant: Aktiebolaget SKF, 415 50 Göteborg (SE)
(72) Inventor: Greco, Feliciano, I-12074, CORTEMILIA (Cuneo) (IT); Bottazzi, Giorgio, I-10040, VAL DELLA TORRE (Torino) (IT); Maniglia, Giuseppe Massimo, I-10078, VENARIA REALE (Torino) (IT); Di Battista, Marco, I-10148, TORINO (IT)
(74) Representative: Fioravanti, Corrado

(57) **Abstract**

The bearing (10) comprises an outer ring (20) provided with a raceway (23) and with at least one shaped groove (24) obtained at a side of the raceway (23). A shield (60) is accommodated in the groove (24) and comprises a shaped annular ridge (61) snap-fitted into the groove (24) to secure the shield (60) to the outer ring (20). The ridge (61) has a cylindrical, radially inner surface (62) which is axially aligned with a corresponding inner cylindrical surface (22) of the outer ring (20).

## Description

The present invention refers to a high-precision rolling-contact bearing.

In the field of high-precision rolling-contact bearings, the peculiar characteristics of which are excellence in terms of quality and in the performance achieved through strict manufacturing methods and controls, there are known bearings comprising an outer ring provided with a respective raceway and two grooves which are arranged at the sides of the raceway and are suitable for the assembly of respective sealing shields for protecting the bearing.

The considerable production costs for such bearings have rendered their standardization necessary so that even when no implementation of the sealing shields is envisaged, grooves at the sides of the raceway are nevertheless provided.

Unfortunately, these grooves, when not used and in particular applications such as, for example, electric spindles, not only become a possible receptacle for contaminants, but may even disturb the normal flow of lubricant fluids.

The object of this invention is to provide a high-precision rolling-contact bearing which, while making it possible to maintain manufacturing standards, can not only be used in all those applications characterized by a considerable presence of contaminants of any kind whatsoever, but can also be used in all those applications where lubrication of the rolling-contact bodies and the rings plays a crucial role for the life of the bearing and its performance.

According to the present invention, there is provided a high-precision rolling-contact bearing as defined in claim 1. Preferred embodiments of the invention are defined in the dependent claims.

The invention will now be described with reference to the attached drawings which illustrate a non-limiting exemplary embodiment, in which:
- figure 1 illustrates, in cross-section and with parts removed for clarity, a high-precision rolling-contact bearing in accordance with the principles of this invention; and
- figure 2 is an enlarged, cross sectional view of a detail of figure 1.

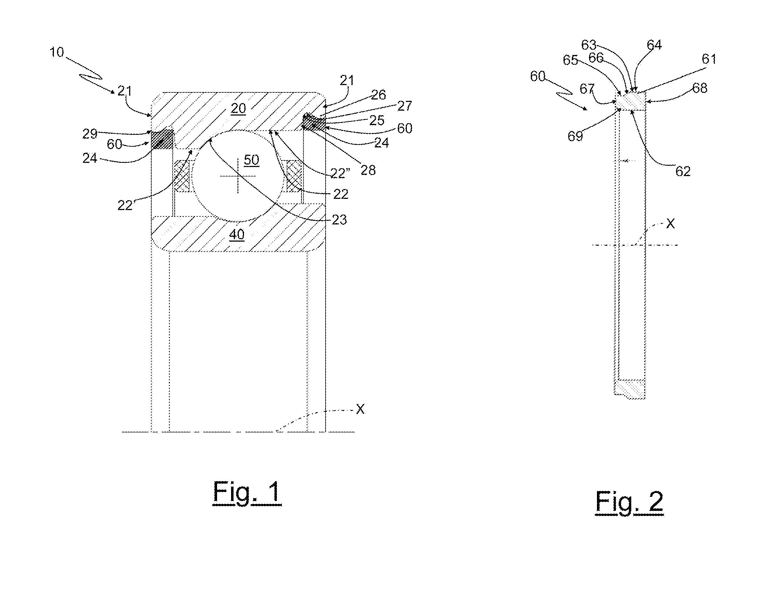

With reference to figure 1, a high-precision rolling-contact bearing is indicated 10 in its entirety. The bearing 10 comprises an outer ring 20 and an inner ring 40 coaxial with one another and defining an axis of rotation x, and a plurality of rolling-contact bodies 50, bearing balls in this example, interposed between the outer ring 20 and the inner ring 40 in order to permit relative rotation of the outer ring 20 and of the inner ring 40.

The outer ring 20 is axially delimited by two annular surfaces 21 transversal to the x axis, and is radially delimited towards the x axis by an inner surface 22 transversal to the annular surfaces 21. The outer ring 20 has a raceway 23 which allows the said bodies 50 to roll in contact with the outer ring 20, and is obtained through the inner surface 22, identifying on the same inner surface 22 a surface portion 22' and a surface portion 22" with inner diameters that differ from one another.

The outer ring 20 also comprises two shaped grooves 24 which are obtained on opposite sides of the raceway through the surface portions 22' and 22" to receive a respective lateral seal (not shown) and are axially delimited towards the outside of the bearing 10 of the annular surfaces 21.

Each groove 24 comprises an annular recess 25 and an annular stop edge 26 which delimits the annular recess 25 axially towards the outside of the bearing 10, and in turn is axially delimited towards the outside of the bearing 10 by the associated annular surface 21.

Each annular recess 25 has an arched bottom groove 27 and faces a respective inclined surface 28 which is contiguous with the associated surface portion 22' and 22" and forms an angle with a width of more than 90° with the surface portion 22', 22". In other words, each surface 28 is axially inclined towards the outside of the bearing 10 and terminates inside the associated groove 27. Finally, each groove 24 comprises an entry bevel 29 obtained on the associated annular edge 27 between each surface 21 and a respective cylindrical surface 30 which delimits the associated edge 27 radially towards the inside.

In brief, the grooves 24 have shapes that are similar to one another and symmetrical with regard to a median plane of the bearing 10 transversal to the axis x, but as they are generated starting from cylindrical portions 21' and 22" with internal diameters of dimensions that differ from one another and have associated grooves 27 with respective bottom diameters also with dimensions that are different from one another, the grooves 24 have respective overall radial dimensions that differ from one another.

The bearing 10 also comprises a shield 60 snap-fitted into the groove 24 left free for one only or for each of the grooves 24, depending on whether there is only one lateral seal or if there is no lateral seal. The shield 60 is arranged to fully close the groove 24 in such a way as to impede the deposit of contaminants in the groove 24 and prevent any disturbance of the normal flow of lubricant fluids used in most of the applications of the bearing 10.

The shield 60 is made of polyoxymethylene which is a polyacetal copolymer or a thermoplastic material with high crystallinity and, furthermore, one which possesses high mechanical properties in terms of rigidity, resistance to impact and smoothness. The hygroscopicity of the shield 60 makes it possible to maintain the values of the mechanical properties and of dimensional stability even in environments with considerable humidity variations or where there is a high presence of contaminants, and it is suitable for machining operations with limited tolerances such as those required for a high-precision rolling-contact bearing.

Furthermore, the material which the shield 60 is made of makes it possible to keep the mechanical characteristics and shape of the shield 60 unchanged even at working temperatures around 60°C-90°C if not at even higher temperatures, as the melting point of the material is above 150°C.

The shield 60 comprises a shaped annular ridge 61 which slots into the annular recess 25 and is axially blocked by the edge 27 in such a way as to stably secure the shield 60 itself to the outer ring 20. The shield 60 also comprises a radial inner surface 62 which has a cylindrical shape coaxial with the axis x and is arranged axially aligned with an associated surface portion 22', 22" of the surface 22 of the outer ring 20. In other words, the radial inner surface 62 and the surface portion 22', or the surface portion 22" depending on the side on which the shield 60 is fitted, are arranged on one same cylindrical surface.

According to what has been better illustrated in figure 2, the shield 60 is radially delimited towards the outside by an outer surface 63 which is shaped in a manner substantially complementary to the form of the associated groove 24 and has two portions 64 and 65 cylindrically arranged on two diameters that differ from one another: the portion 64 radially delimits the annular ridge 61 and the dimensions of its diameter are greater than the diameter of the portion 65 which is joined to the portion 64 by means of an inclined flat surface 66.

Furthermore, the shield 60 is axially delimited by two annular surfaces 67 and 68 transversal to the axis x and of which the annular surface 68 is arranged in contact with an associated inclined surface 28, while the annular surface 67 is arranged axially flush with the associated annular surface 21 of the outer ring 20 itself.

Finally, the shield 60 has an inner bevel 69 which is obtained between the surfaces 62 and 67, and is suitable for further assisting the circulation of the lubricant fluids mentioned above.

The above described shield 60 is snap fitted into the associated groove 24 and this insertion is aided both by the presence of the bevel 29, and by the properties of the material which the shield 60 is made of: this material, in fact, permits an initial deformation of the ridge 61 against the edge 26 and, once the edge 26 has been surpassed axially, it permits the ridge 61 to expand radially inside the annular recess 25 until it almost completely fills the entire groove 27. This expansion gives rise to the radial blocking of the shield 60 in the groove 24 and also ensures the maintenance of the shield 60 position during operation of the bearing 10.

According to an embodiment not illustrated, but easy to derive from the foregoing description, the above described shield 60 can also be directly co-moulded inside the associated groove 24.

Just as the grooves 24 have forms similar to one another and that are symmetrical compared with a median plane of the bearing 10, but have different axial thicknesses, the shield 60 fitted with its own surface 62 aligned axially with the surface 22' also has a form similar and symmetrical to the shield 60 fitted with its own surface 62 axially aligned with the surface 22". In these cases the radial thicknesses of the two shields (60) 60 differ from one another.

The invention should not be limited to the embodiments described and illustrated here, which are to be considered as examples of the high-precision rolling-contact bearing which is, instead, open to further modifications as regards shapes and arrangements of parts, constructional and assembly details.

## Claims

1. A high precision rolling-contact bearing (10) comprising an outer ring (20) provided with a raceway (23) and with at least one shaped groove (24) obtained at a side of the raceway (23);
**characterized in that** the bearing comprises a shield (60) which is accommodated in the groove (24) and comprises a shaped annular ridge (61) which is snap-fitted into said groove (24) to secure the shield (60) to the outer ring (20), and a radially inner surface (62) which has a cylindrical shape and is axially aligned with a corresponding inner cylindrical surface (22) of the outer ring (20).

2. A bearing according to claim 1, **characterized in that** said shield (60) is made of a high-crystallinity thermoplastic material.

3. A bearing according to claim 2, **characterized in that** said material is a polyacetal copolymer.

4. A bearing according to claim 3, **characterized in that** the polyacetal copolymer material is polyoxymethylene.

5. A bearing according to any one of the preceding claims, **characterized in that** the radially inner surface (62) has a surface finish similar to a surface finish of the corresponding inner cylindrical surface (22) of the outer ring (20).

6. A bearing according to any one of the preceding claims, **characterized in that** the shield (60) is made by co-moulding with the outer ring (20).

7. A bearing according to any one of the preceding claims, **characterized in that** the groove (24) comprises an annular recess (25) and a stop edge (26) delimiting the annular recess (25) axially on the outside of the outer ring (20); the annular ridge (61) being arranged in the annular recess (25) and being axially held by the stop edge (26).

8. A bearing according to claim 7, **characterized in that** the shield (60) is radially bounded on the outside by a surface (63) with two radial levels (64, 65); a first level (65) of the two radial levels (64, 65) radially bounding the annular ridge (61), and a second level (64) of the two radial levels (64, 65) having a smaller diameter than the first level (65), and being joined to the first level (65) by an oblique surface (66).

9. A bearing according to any one of the preceding claims, **characterized in that** it comprises two shaped grooves (24) obtained on opposite sides of the raceway (23); the bearing (10) also comprising a shield (60) for each groove (24).

10. A bearing according to claim 9, **characterized in that** the radially outer surface of each shield (60) has a diameter different from a diameter of the radially outer surface of the other shield (60).

11. A bearing according to claim 9 or 10, **characterized in that** each shield (60) has a radial thickness different from a radial thickness of the other shield (60).
